# EUROPEAN PATENT APPLICATION

(11) **EP 2 154 499 A1**
(43) Date of publication of application: **17.02.2010**
(21) Application number: 09010394.6
(22) Date of filing: 12.08.2009
(51) Int. Cl.: G01J 5/00, G01J 5/02, G01J 5/08

(54) **Video thermometry**

(30) Priority: 13.08.2008 US 188820 P
(71) Applicant: White Box, Inc., Stamford, CT 06907 (US)
(72) Inventor: Hollander, Milton Bernard, Stamford, CT 06903 (US); Baghai, Shahin, Trumbull, CT 06611 (US)
(74) Representative: Steil, Christian

(57) **Abstract**

System and method are described for display of remote surface measurement areas by capture of both a visible and an infrared view of an identified surfaced measurement area and the mutual display of the visible and infrared views of the thermal image zones with temperature indication across a panoramic view of the measured area by video.

## Description

This application incorporates by reference all of the disclosure and also claims the benefit of the filing date of our co-pending United States provisional application No. 61/188,820 filed August 13, 2008.

This invention relates to video systems for variable parameter measurement, detection and management, and particularly relates to thermometers, radiometers, bolometers, temperature display and control and to methods of operating these systems.

Reference hereinafter to "infrared radiometer" includes "thermal imaging radiometer" and thermography. An infrared radiometer provides single temperature measurement, whereas an infrared thermal imaging radiometer provides a two dimensional thermographic infrared image of a target camera, pixel by pixel, and supplies more information over time when linked to video than a single temperature radiometer. An infrared thermal imaging radiometer captures an infrared image of a target surface as a color display and the color palette embraces a range of temperature to be measured which is panoramically displayed on video camera over time as well as over distance.

A video system for remote imaging of variable parameters from a measurement surface comprises the combination of a detector means for capture and measurement of radiation from the surface together with sighting and display means for aiming the detector to a light display visualized area of surface measurement and with a video image management means linked to the detector and sighting means to produce a continuous panoramic video digital image of a remote measurement surface from which radiation arises and is linked with a display means for examination of the image of the emitted surface radiation together with visible features of the measurement surface.

The method of the invention comprises the steps of detecting electromagnetic radiation arising from a remote surface, without contacting the surface, and producing measurement values from said radiation; visualizing the source area of radiation by illumination of said surface with a pattern of visible light display to form a video target sighting/aiming display; and capturing a video image of visible and infrared radiation from the measurement surface in a video device; and displaying both visible and infrared images of said surface together with measurements taken from said surface.

The video means is preferably linked to the detector and to the display by wireless connection.

The measured values are verbalized and broadcast as a spoken report.

### EXAMPLE

A preferred best mode embodiment of a basic system comprises an infrared radiometer or thermal imaging device or camera linked with a digital video camera. Linkage is selectably digital or analogue; and when linkage is wireless, it comprises any or all of radio, ultrasonic or optical transmissions. A video camera operates either independently, or selectably under control from the radiometer, and the radiometer is also selectably controlled from the camera. Camera and/or radiometer are preferably separated stand-alone units, which are linked by wire or wireless, but are also alternatively selectably mounted together as a common hand held unit. When the radiometer is linked to the video camera, temperature data, for example, is sent to the camera for display together with a visible image of the surface from which infrared radiant temperature is detected. The video feature provides continuous panoramic views of the surface from which temperature is detected over both real time and along distance and includes both a visible and an infrared thermal display. Such performance and display is not possible with a snapshot camera of any kind.

The video display preferably includes a running record of time of day and date together with temperature being measured on a remote surface and also ambient temperature. The video record is continuously annotated by features beyond only infrared temperature and additionally includes emissivity, alarms, distance, time, date, minimum and/or maximum temperatures, as well as sound features from a microphone or other sound source, such as a recording on a chip, disc or tape. The sound source is also connected into the system network by wireless and output of any feature of the system is captured via a PC or the like to feed E-mail signals for remote access. Sound recording is broadcast together with visible displays. The video camera sends the file digitally to a local PC, such as via USB interface or to a networked PC via Ethernet or Internet, or connects via E-mail through a server and may respond to a pre-set alarm condition.

The video camera is connected to another electronic measurement device for such parameters as temperature, humidity, pressure, volume, flow rate, or stress or distance or displacement and receives data from that device by digital, analogue or wireless means and annotates the video image with such data while recording image and sound in real time.

Prior art includes light display targeted infrared radiometers with and without snapshot camera features, as in U.S. Patent No. 7,093,974 of KIENITZ issued August 22, 2006.

Since the measured temperature indicates heat released from a measured surface as invisible infrared radiation, it is known to make the measurement area visible by display thereupon of a light sighting/aiming pattern against the measurement surface from laser or visible light sources coupled to the radiometer optics, and the display is then also captured by the video camera, as the radiometer operates to visualize the outline of the surface area of temperature investigated. The identification sighting light arises from visible sources, such as lasers or halogen lamps, and may also comprise a single laser from which beams are divided by diffraction or splitters; or for eye safety at long working distances, separate light sources may be used to attain greater display brightness.

The video "visible" display may be juxtaposed to the "thermal" image, either above, below or side by side, to produce comparative serial images displayed together of the thermal and visible features. Continuous video capture of a thermal display shows changing heat flux against a visible target surface structure background over time. A snapshot camera does not provide this display continuity. The thermal image video may be displayed alternately, over time, vis a vis the non-thermal visible image video so that a continuous or sequential alternating panorama is on view in the same display system.

### DRAWING

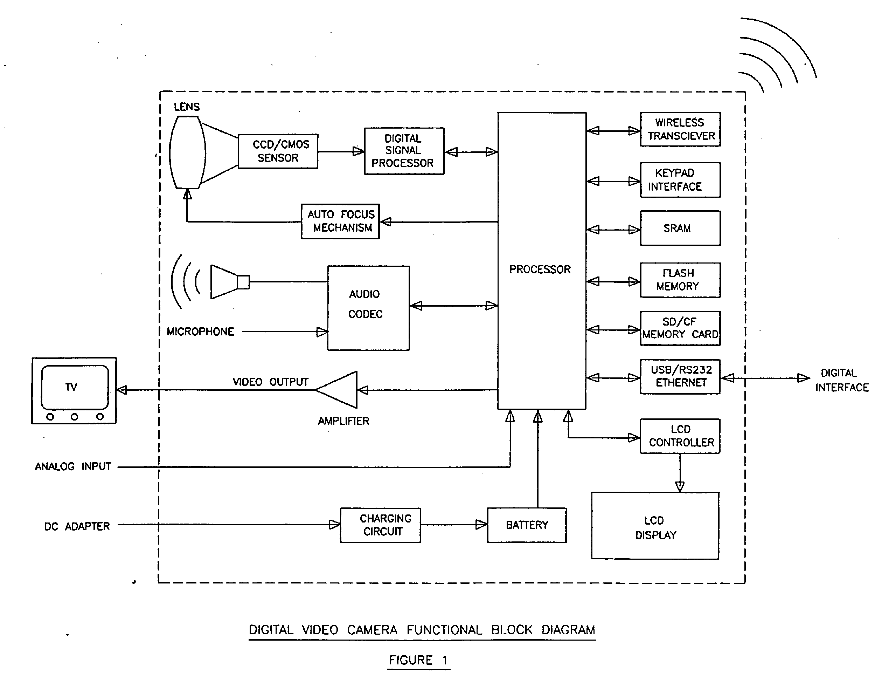

Figure 1 is a functional block diagram of a video camera used in this invention. The camera includes inputs for sound as well as analogue/digital wireless input and has output connections for TV or video replay, recording, or connection to E-mail.

Figure 2 illustrates a handheld infrared radiometer unit for investigation of surface temperature at a distance. The radiometer links to a video camera by digital interface (RS 232, USB, and radio broadcast, as via a router system).

The video camera captures the output of a radiometer and the system displays time, date, surface temperature, emissivity, alarm set points and ambient temperature together with the image of the area of surface investigation. The display may show either a laser pattern of the outline of the target and/or a center point to identify the source of measurement. A microcomputer feature of the system provides graphic calculation and display of changes over real time and stores all collected data in accessible memory.

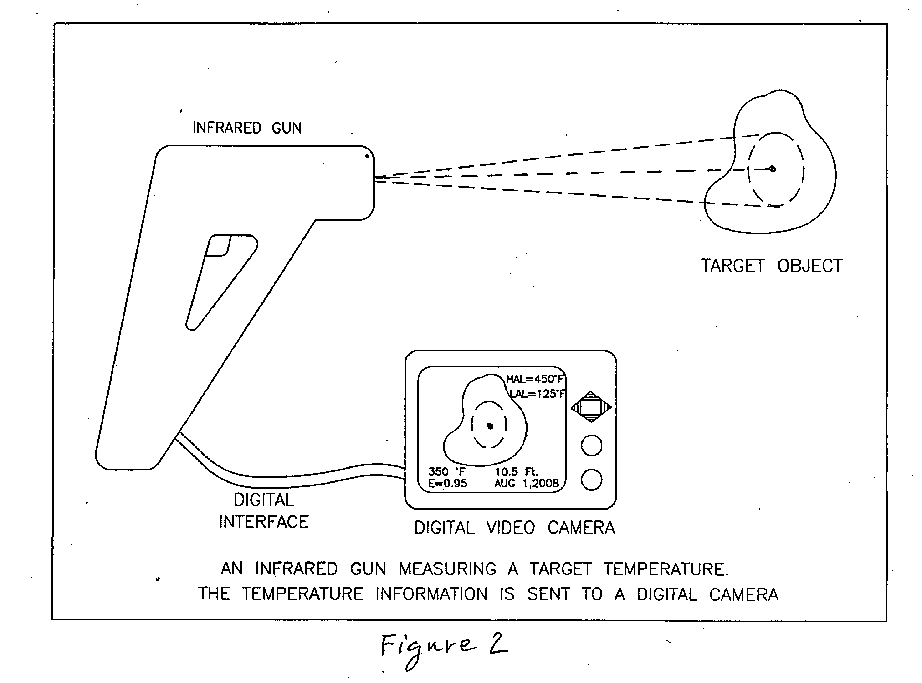

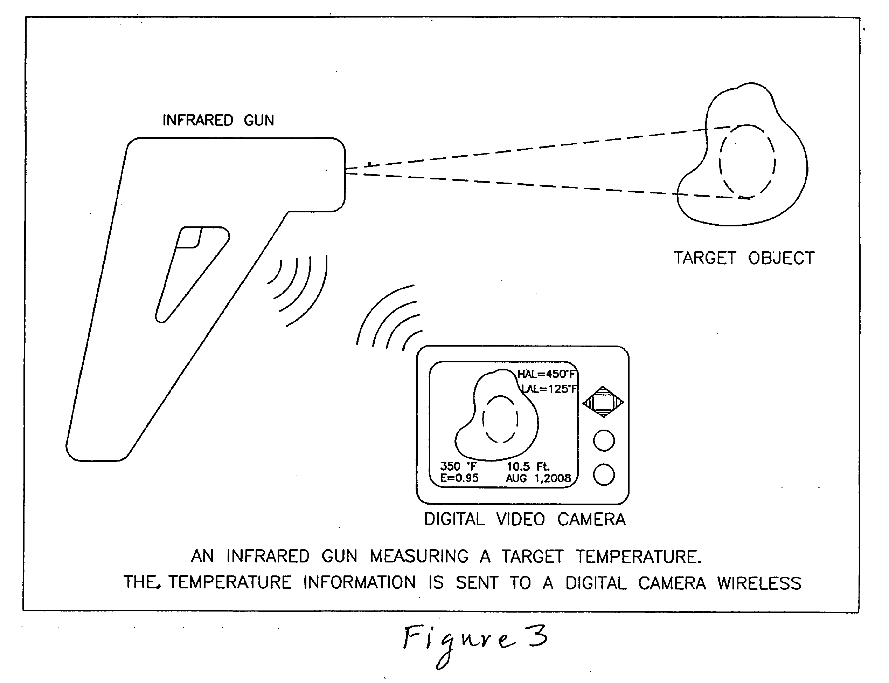

Figure 3 shows wireless linkage of the camera of Fig. 2 with the radiometer.

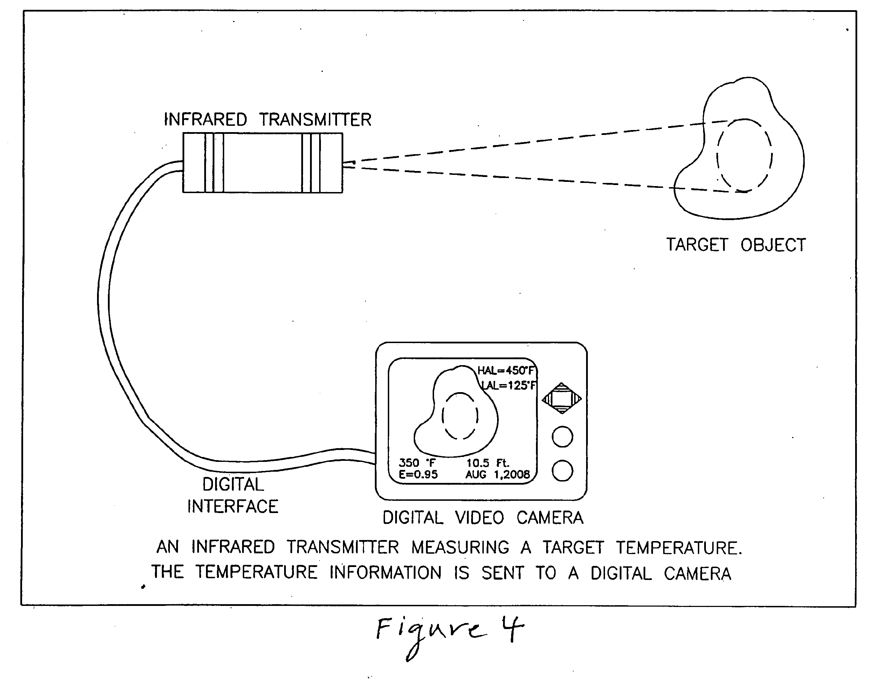

Figure 4 is a fixed mounted version of the radiometer and camera.

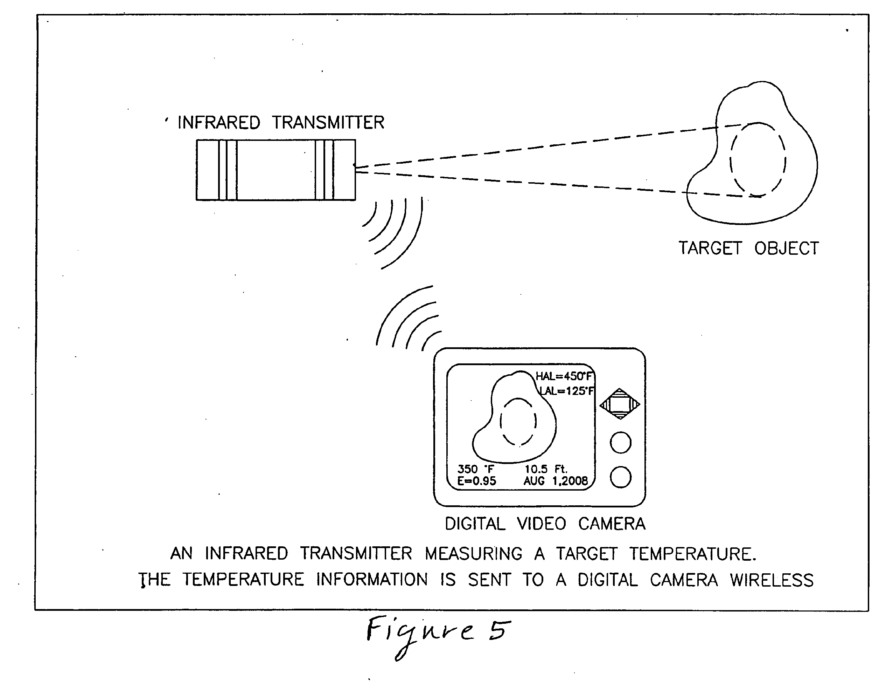

Figure 5 shows wireless linkage of the camera and fixed mounted infrared transmitter.

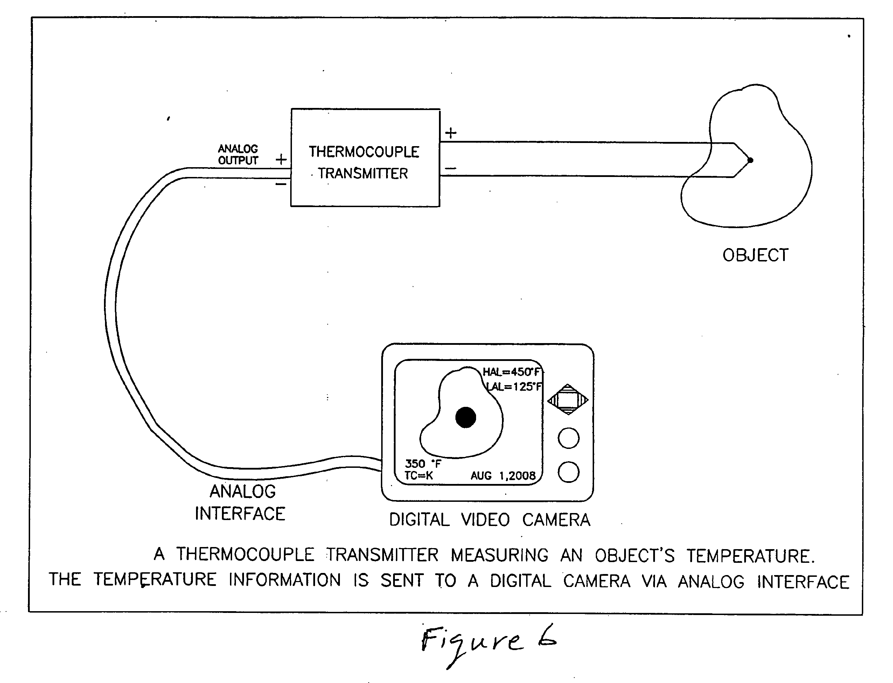

Figure 6 shows analogue output from a thermocouple transmitter and linkage to analogue input of a video camera.

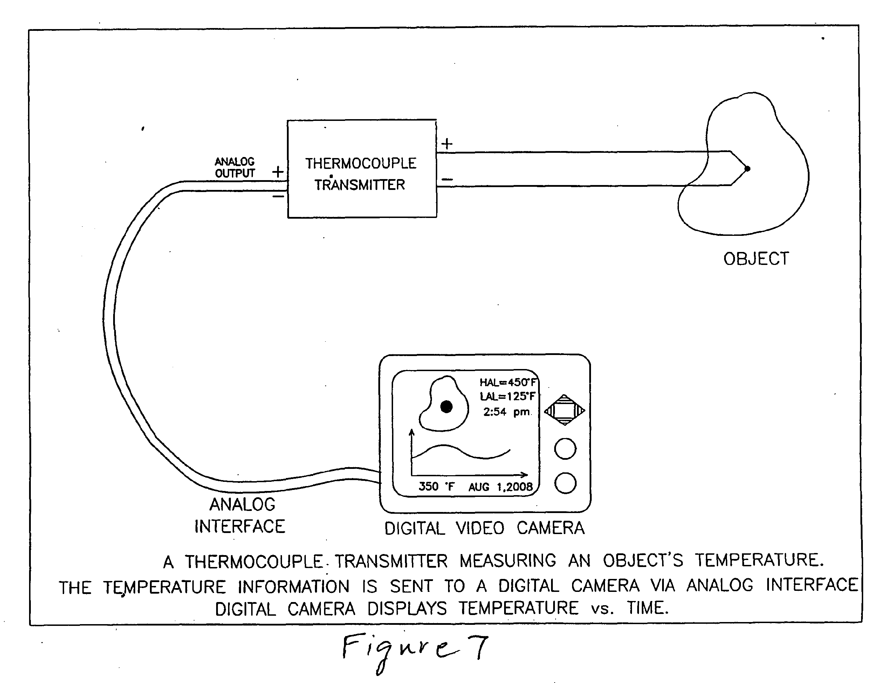

Figure 7 shows a video camera, which displays a plot of temperature in real time.

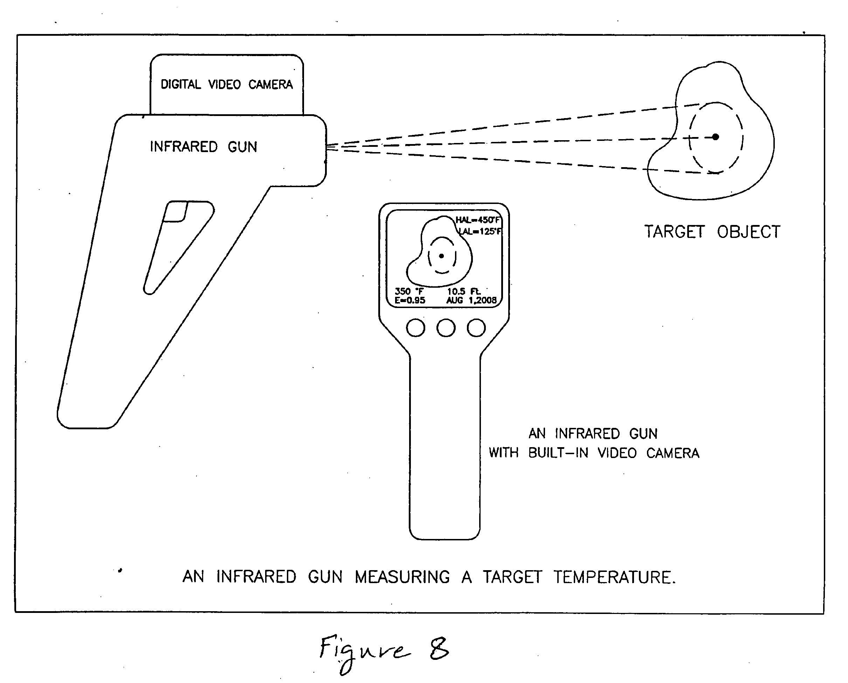

Figure 8 shows a video camera, which is selectably either integral with a radiometer device, or detachable therefrom to operate as a stand-alone unit.

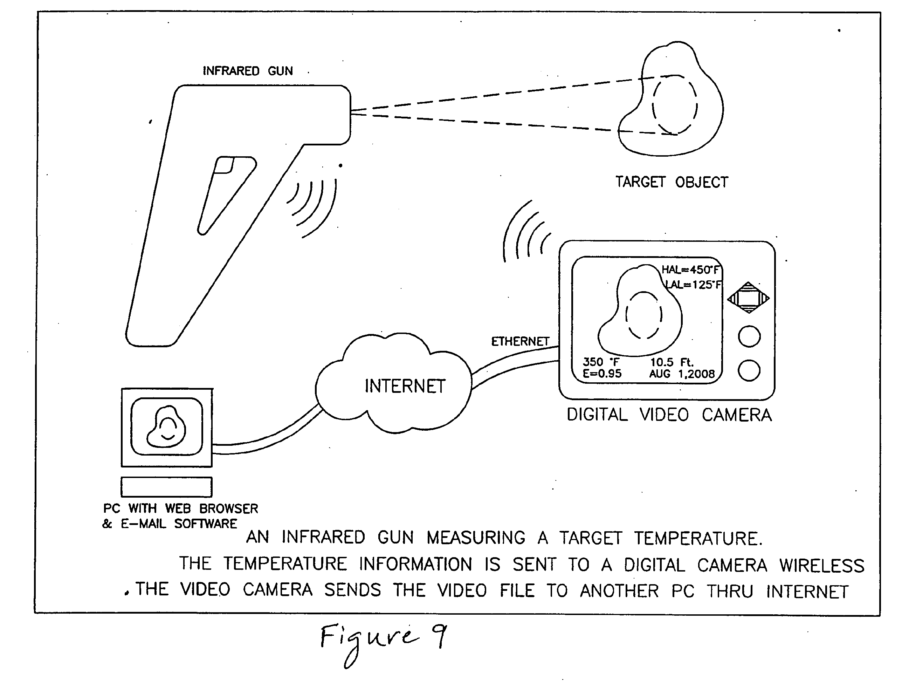

Figure 9 is similar to Figure 3 except that the camera sends the video file to a PC via Internet or E-mail according to operational conditions selected by the operator.

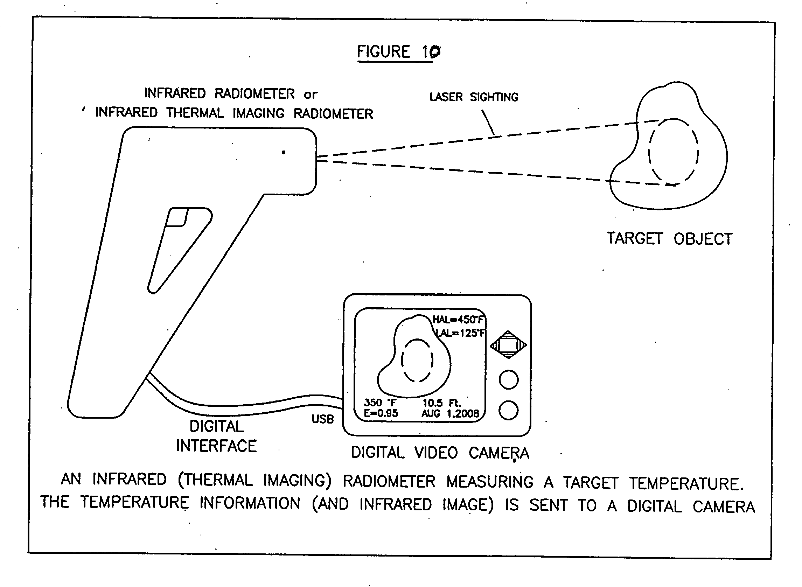

Figure 10 is an infrared (thermal imaging) radiometer measuring a target surface temperature. The temperature measurement or infrared image is sent to a digital camera.

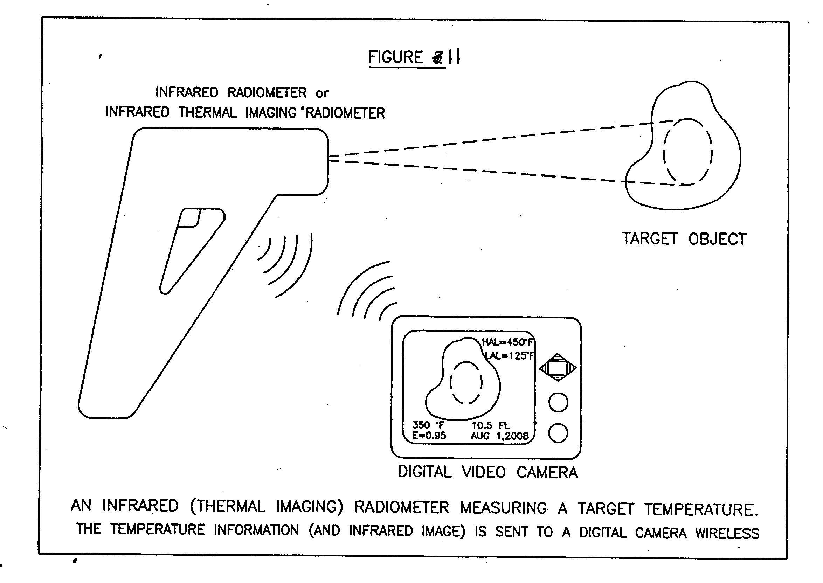

Figure 11 shows wireless transmission of detected thermal information sent from the image detector.

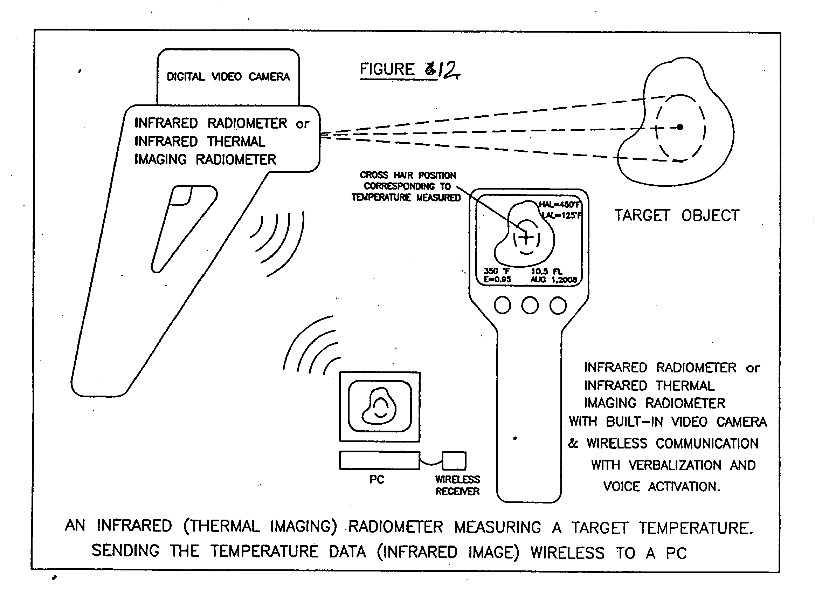

Figure 12 shows a thermal imaging detector with a built in display and video camera. It includes wireless image transmission and verbalization of measured values as well as visual display.

Because an infrared thermal imaging radiometer system with a visible camera system has visible as well as infrared thermal video capacity it is possible to display continuously, sequentially and/or even simultaneously both visible and infrared thermal images, for example, either alternately or one above the other or side by side (serially juxtaposed), rather than superposed one on the other, to maximize image view size on a display means sequentially whilst correlating and comparing visible and thermal features of the surface.

A thermal imaging radiometer captures a display of differential color images to show surface thermal disparity and so produces a thermal color map to correlate with a corresponding visible view. A movable cursor under control of the system operator highlights or expands or modifies features of special interest for closer examination or management of temperature, even pixel by pixel.

A method of the invention includes the sequential steps of (a) detecting remote surface temperature from a surface producing invisible infrared radiation and (b) visualizing the infrared area of investigation by a sighting display on the measured surface of laser illumination and (c) capturing the sighting laser display on a video camera for visible display together with the measured temperature from an infrared radiometer and/or other test device linked to the video camera and the video record is then recorded and/or sent onward, via E-mail, for example. Thus both infrared displays such as temperature and also visible views of the measurement surface are captured and displayed by the system in a method of dual infrared and visible light investigation.

## Claims

1. Video system for imaging radiation from a remote measurement surface comprising the combination of
detector means for capture and measurement of radiation from said surface;
sighting and display means for aiming said detector means to a particular aiming light display visualized area of measurement on said surface;
video image management means linked to said detector and sighting means to produce a continuous panoramic video digital image of a remote measurement surface from which radiation arises; and
display means for comparative examination of a video infrared image of emitted surface radiation together with video visible features of said measurement surface.

2. Method of non-contact measurement and display of radiation arising from a remote measurement surface comprising the steps of
detecting electromagnetic radiation arising from a remote surface without contacting said surface and producing measurement values of said radiation;
visualizing the source area of radiation by illumination of said surface with a pattern of visible light display to form a video target sighting display;
capturing a video image of visible and infrared radiation from the measurement surface in a video device; and
displaying both visible and infrared images of said surface together with measurements taken from said surface.

3. A system of claim 1 in which the video is linked to the detector and to the display wireless connection.

4. A system of claim 1 or 3 which includes means to verbalize and to broadcast a spoken report of measured values.

5. A method of claim 2 which includes the step of broadcasting spoken results of measurement.

6. A method according to claim 2 or 5 which includes the step of connecting the video with a detector and with a display by wireless means.
